# EUROPEAN PATENT SPECIFICATION

(11) **EP 2 746 682 B1**
(45) Date of publication and mention of the grant of the patent: **27.01.2021**
(21) Application number: 13194993.5
(22) Date of filing: 29.11.2013
(51) Int. Cl.: F24C 15/32

(54) **Cooking apparatus**
Kochvorrichtung
Appareil de cuisson

(30) Priority: 21.12.2012 KR 20120150759
(43) Date of publication of application: 25.06.2014
(73) Proprietor: Samsung Electronics Co., Ltd., Gyeonggi-do 16677 (KR)
(72) Inventor: Yang, Sung Pyo, Gyeonggi-do (KR); Kang, Han Seong, Gyeonggi-do (KR); Moon, Byoung Hoon, Seoul (KR); Cho, Pung Yeun, Gyeonggi-do (KR); Hwang, Yun Ic, Gyeonggi-do (KR)
(74) Representative: Walaski, Jan Filip

(56) References cited:
- EP-A1- 2 083 223
- EP-A1- 2 461 107
- DE-A1- 10 234 625
- DE-A1- 19 912 444
- DE-A1-102004 006 973
- DE-A1-102009 055 146

## Description

The present invention relates to a cooking apparatus having a steam supply device to supply steam to a cooking chamber.

A cooking apparatus has been used in which food is able to be cooked using steam heat. Such a cooking apparatus includes a steam supply device to supply steam to a cooking chamber in which food is cooked.

The steam supply device includes a water storage unit to store water and a steam generator to generate steam by heating water transferred from the water storage unit, and supplies steam generated by the steam generator to a cooking chamber so as to allow food in the cooking chamber to be cooked by the steam.

EP2083223 discloses a cooker having a cooker main body and a discharged steam cooling unit placed at the top surface of the cooker main body. The operation of the cooker is controlled by a control device.

DE102009055146 discloses a steam generation system having a liquid reservoir, an evaporator supplied with liquid from the liquid reservoir and a pump for promoting liquid. The evaporator is connected to the liquid reservoir via the pump and a multi-way valve network. The positions of the valves are switched to fill and empty the evaporator, respectively.

DE19912444 discloses a device for electronically monitoring scaling in a device for heating and/or evaporating a liquid. An evaluation unit is connected to at least one flowmeter for evaluating liquid levels within the device.

EP2461107 discloses a cooking apparatus with a steam generator and a flow sensing sensor.

Therefore, it is an aspect of the present invention to provide a cooking apparatus having a steam supply device capable of more efficiently utilizing water.

It is an aspect of the present invention to provide a cooking apparatus capable of preventing drop water generated during attachment and detachment of a water storage container from being introduced into a main body.

It is an aspect of the present invention to provide a cooking apparatus capable of maintaining a state where an opening, through which a water storage container is attached and detached, is stably closed by a water supply door.

Additional aspects of the invention will be set forth in part in the description which follows and, in part, will be obvious from the description, or may be learned by practice of the invention.

According to an aspect of the present invention, there is provided a cooking apparatus according to claim 1.

Optional features are set out in the dependent claims.

The steam supply device includes a water supply pump that is disposed at the water supply tube and allows water to be moved from the water storage unit to the steam generator.

The steam supply device also includes a water collection pump that is disposed at the water collection tube and allows water to be moved from the steam generator to the water storage unit.

Further, the steam supply device includes a water flow sensing sensor disposed at the water supply tube to sense flow of water.

The steam supply device may include a steam supply tube to transfer steam generated by the steam generator to the cooking chamber.

The water storage unit may include a water storage case mounted within the main body and a water storage container that is separately installed to the water storage case, and the main body may include an opening through which the water storage container passes and a water supply door that is rotatably mounted, at a lower end thereof, to a front surface of the main body to open and close the opening during rotation of the water supply door.

The water supply door may include a guide rib that is provided on an inner surface thereof and is formed in a U-shape oriented downward, and a guide portion protruding inside the water supply door from an inner surface lower portion thereof, a lower end of the guide rib being formed at both sides of the guide portion.

The water storage case may include a drop water storage portion recessed downward at a lower portion thereof to receive and gather drop water.

The main body may include a non-magnetic portion made of a non-magnetic substance that is provided in a part adjacent to the opening and a magnetic portion made of a magnetic substance that is provided in the part adjacent to the opening, and the water supply door may include at least one magnet disposed to face the non-magnetic portion.

The at least one magnet may include a first magnet a portion of that faces the magnetic portion and the remainder of which faces the non-magnetic portion, and a second magnet the entirety of which faces all of the non-magnetic portion.

The main body may include a button disposed in the part adjacent to the opening, a protrusion length of the button alternately varying depending on the number of times the button is pressed.

In accordance with an embodiment of the present invention, a cooking apparatus includes a main body provided with a cooking chamber, and a steam supply device generating steam to supply the steam to the cooking chamber, wherein the steam supply device includes a water storage container that is attachable to, and detachable from, the main body, and a steam generator that is supplied with water from the water storage container to generate steam, the main body includes an opening through which the water storage container is attached and detached, a water supply door to open and close the opening, a non-magnetic portion made of a non-magnetic substance that is provided in a part adjacent to the opening, and a magnetic portion made of a magnetic substance that is provided in the part adjacent to the opening, and the water supply door includes at least one magnet disposed to face the non-magnetic portion.

In accordance with a further embodiment of the present invention, a cooking apparatus includes a main body provided with a cooking chamber, a water storage unit to store water, and a steam generator that is supplied with water from the water storage unit to generate steam, wherein the water storage unit includes a water storage case mounted within the main body and a water storage container that is separately installed to the water storage case, the main body includes an opening through which the water storage container is attached and detached, a water supply door which is rotatably mounted, at a lower end thereof, to the main body to open and close the opening, and the water supply door includes a guide rib that is provided on an inner surface thereof and is formed in a U shape toward downward.

These and/or other aspects of the invention will become apparent and more readily appreciated from the following description of the embodiments, taken in conjunction with the accompanying drawings of which:
FIG. 1 illustrates a cooking apparatus according to an embodiment of the present invention;
FIG. 2 illustrates a steam supply device included in a cooking apparatus according to an exemplary embodiment of the present invention;
FIGS. 3 and 4 a illustrating an exemplary operation of a steam supply device included in the cooking apparatus according to an embodiment of the present invention;
FIG. 5 is an enlarged view of portion A illustrated in FIG. 1;
FIG. 6 illustrates an exemplary a part adjacent to an opening provided in a main body; and
FIGS. 7 and 8 illustrate an exemplary opening and closing state of a water supply door included in a cooking apparatus according to an embodiment of the present invention.

Reference will now be made in detail to the embodiments, examples of which are illustrated in the accompanying drawings, wherein like reference numerals refer to the like elements throughout. The embodiments are described below to explain the present invention by referring to the figures.

A cooking apparatus including a steam supply device according to an embodiment of the present invention is described in detail with reference to the drawings, wherein like reference numerals refer to like elements throughout.

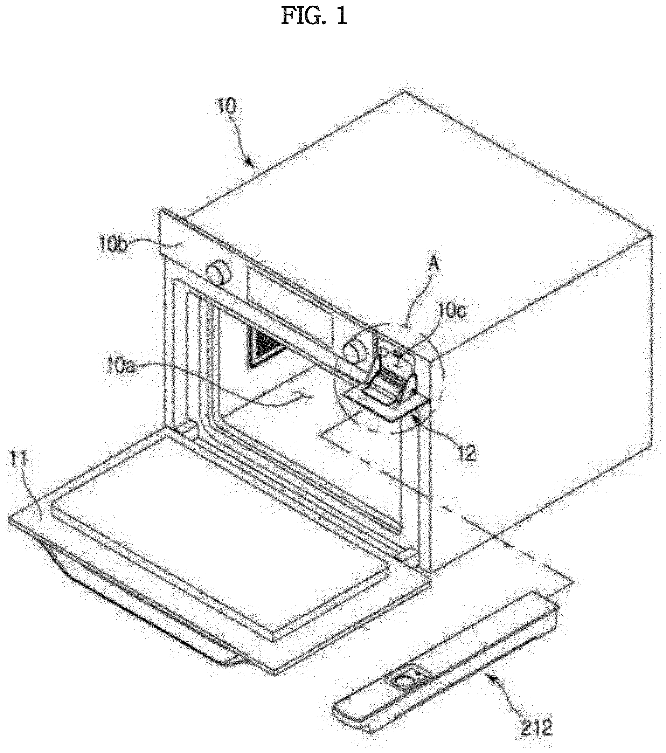

As illustrated in FIG. 1, a cooking apparatus according to an embodiment of the present invention includes a main body 10 provided with a cooking chamber 10a into which food to be cooked may be inserted, and a door 11 mounted on a front surface of the main body 10 to open and close the cooking chamber. The main body 10 may be provided, at a front surface upper portion thereof, with a control panel 10b that may manipulate various conditions such as an output of the cooking apparatus and a cooking time.

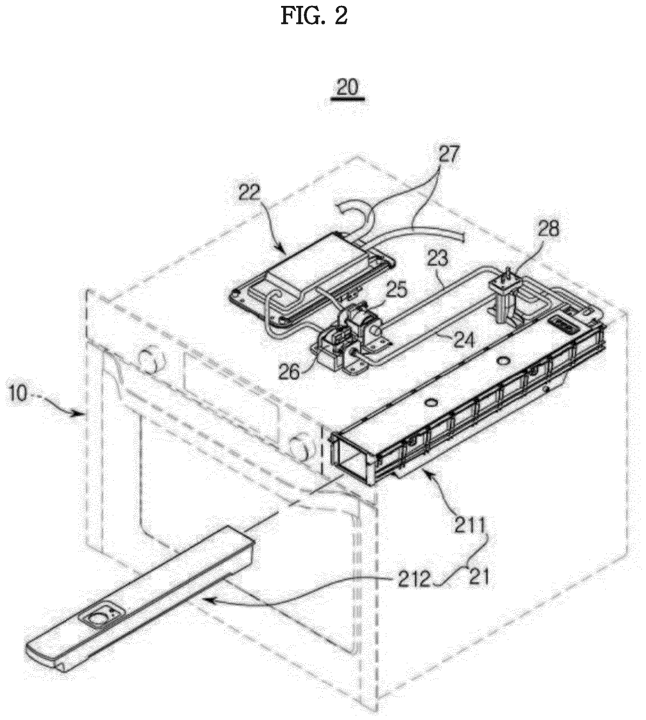

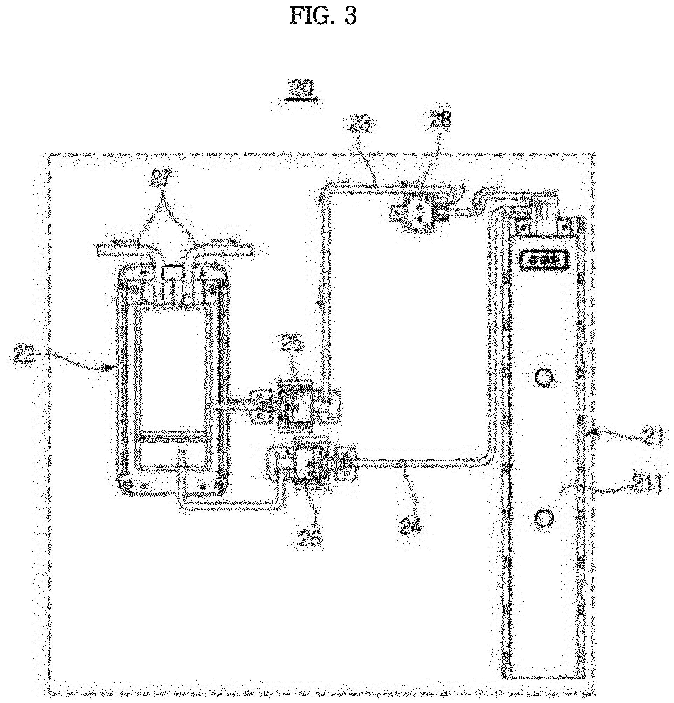

As illustrated in FIGS. 2 and 3, the main body 10 has a built-in steam supply device 20 to generate and supply steam to the cooking chamber 10a, for example, at an upper portion of the main body 10. The steam supply device 20 includes a water storage unit 21 and a steam generator 22, wherein the water storage unit 21 stores water required for a steam generator, and the steam generator 22 is supplied with water from the water storage unit 21 and generates steam. The water storage unit 21 and the steam generator 22 may be connected to each other through a water supply tube 23 to guide water of the water storage unit 21 to the steam generator 22. A water collection tube 24 may guide residual water in the steam generator 22 to the water storage unit 21.

The steam generator 22 may be connected with steam supply tubes 27 to guide steam generated by the steam generator 22 to the cooking chamber 10a. According to an exemplary embodiment, two steam supply tubes 27 are provided, and thus steam generated by the steam generator 22 may be guided through the steam supply tubes 27 to both sides of the cooking chamber 10a, respectively.

The steam supply device 20 includes a water supply pump 25, which is disposed at the water supply tube 23 and allows water to be transferred from the water storage unit 21 through the water supply tube 23 to the steam generator 22, and a water collection pump 26, which is disposed at the water collection tube 24 and allows residual water in the steam generator 22 to be collected from the steam generator 22 through the water collection tube 24 to the water storage unit 21. The water supply tube 23 may be provided with a water flow sensing sensor 28 disposed between the water storage unit 21 and the water supply pump 25 to sense whether water flows through the water supply tube 23.

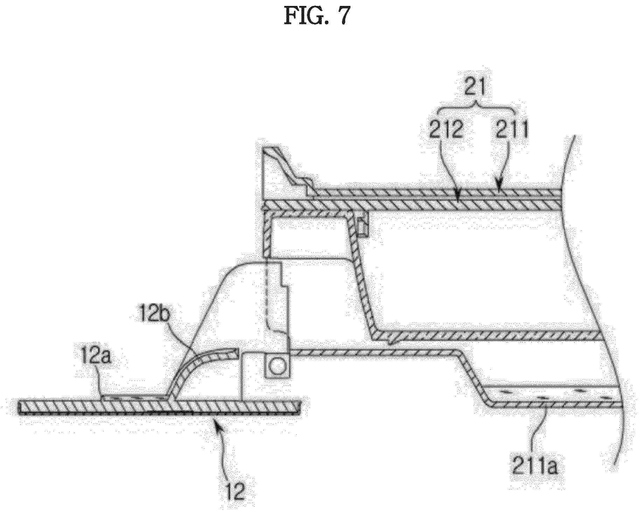

The water storage unit 21 includes a water storage case 211 mounted within the main body 10 and a movable water storage container 212, which may be separately installed to the water storage case 211, and may be attached to, and detached from, the main body 10. The water storage case 211 may have an open front side so as to attach and detach the water storage container 212. The water storage case 211 may include, at a lower portion thereof, a drop water storage portion 211a (see, for example, FIG. 7) recessed downward in order to receive and gather drop water generated during attachment and/or detachment of the water storage container 212. Accordingly, a user may replenish water to be used for the steam generator 22 by separating the water storage container 212 from the main body 10, putting water into the water storage container 212, and mounting the water storage container 212 to the main body 10.

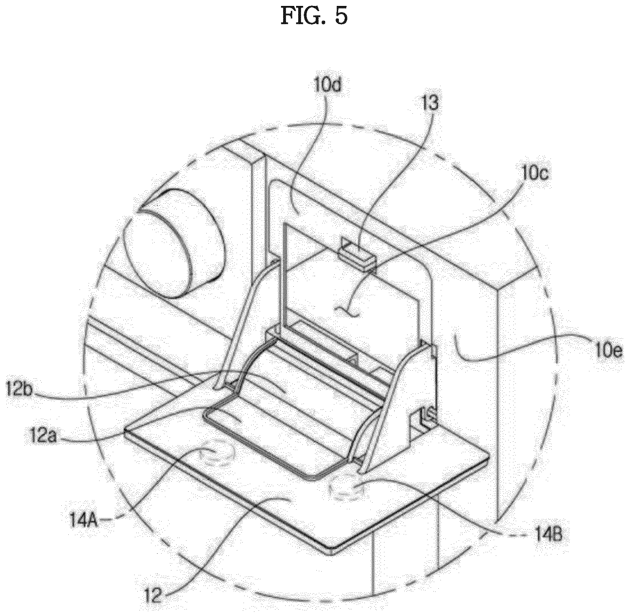

As illustrated in FIG. 5, a side of the front surface upper portion of the main body 10 may be provided with an opening 10c through which the water storage container 212 is attachable to, and detachable from, the water storage case 211 mounted within the main body 10. The opening 10c may be provided to correspond to the water storage case 211, and may be opened and closed by a water supply door 12 that is rotatably mounted on the front surface of the main body 10. The water supply door 12 may be rotatably mounted, at a lower end thereof, to the main body 10 to open and close the opening 10c while rotating about the lower end.

The water supply door 12 may be provided, on an inner surface thereof, with a guide rib 12a, which may formed in a U-shape oriented downward of the water supply door 12 (a U-shape illustrated rearward in Fig. 5) so as to serve to receive and gather drop water dropping on the inner surface of the water supply door 12. The water supply door 12 may be provided, at an inner surface lower portion thereof, with a guide portion 12b extending rearward, inside the opening 10c so as to have an arc-shaped cross-section.

A lower end portion of the guide rib 12a may be provided at both sides of the guide portion 12b. Thus, water gathered by the guide rib 12a may be guided into the water storage case 211 disposed inside the opening 10c by the guide portion 12b.

To maintain a state in which the opening 10c is closed by the water supply door 12, a part adjacent to the opening 10c of the main body 10 may include a non-magnetic portion 10d made of a non-magnetic substance and a magnetic portion 10e made of a magnetic substance, and the water supply door 12 may include magnets 14A and 14B. According to an exemplary embodiment, the non-magnetic portion 10d may be arranged around the opening 10c, and the magnetic portion 10e arranged outside the non-magnetic portion 10d. Accordingly, the water supply door 12 maintains a closed state of the opening 10c by magnetic force acting between the magnets 14A and 14B and the magnetic portion 10e.

The magnets 14A and 14B may be arranged such that most regions thereof face the non-magnetic portion 10d. This enables easy operation of the water supply door 12 with a small force by allowing only a small magnetic force to act between the magnets 14A and 14B and the magnetic portion 10e by spacing the magnetic portion 10e and the magnets 14A and 14B a certain distance from each other.

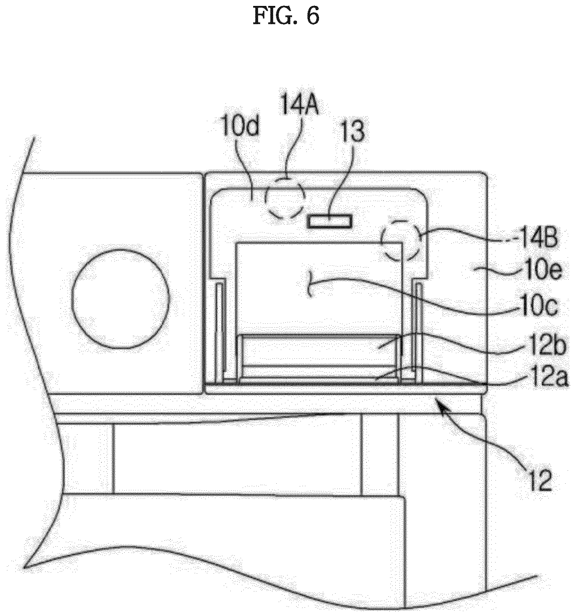

According to an exemplary embodiment, the magnets 14A and 14B include a first magnet 14A having only a portion of which faces the magnetic portion 10e and the remainder of which faces the non-magnetic portion 10d, and a second magnet 14B, the entirety of which faces the non-magnetic portion 10d, as illustrated in FIG. 6.

A part adjacent to the opening 10c of the main body 10 may include a button 13, a protrusion distance of which alternately varies depending on a number of times the button 13 is pressed. Accordingly, the button 13 selectively protrudes forward through the water supply door 12 depending on the number of times the button 13 is pressed by a user, thereby pushing the upper end of the water supply door 12. Since the water supply door 12 maintains the state of closing the opening 10c by a small magnetic force acting between the magnets 14A and 14B and the magnetic portion 10e, the water supply door 12 may be pushed, at the upper end thereof, by the button 13 depending on protrusion thereof to be spaced apart from the opening 10c, and the water supply door 12 rotate about the lower end thereof by gravity. Consequently, the opening 10c may be opened.

The steam generator 22 includes a heater (not shown) to apply heat, and generates steam by heating water transferred to the steam generator 22.

An exemplary operation of a cooking apparatus is described in detail with reference to the drawings.

In cooking food using steam, the water supply pump 25 may be operated and water may be supplied from the water storage unit 21 through the water supply tube 23 to the steam generator 22, as illustrated in FIG. 3. Since water supplied to the steam generator 22 is heated and evaporated in the steam generator 22, steam is generated by the steam generator 22. Steam generated by the steam generator 22 may be transferred to both sides of the cooking chamber 10a through two steam supply tubes 27, thereby allowing food to be cooked in the cooking chamber 10a.

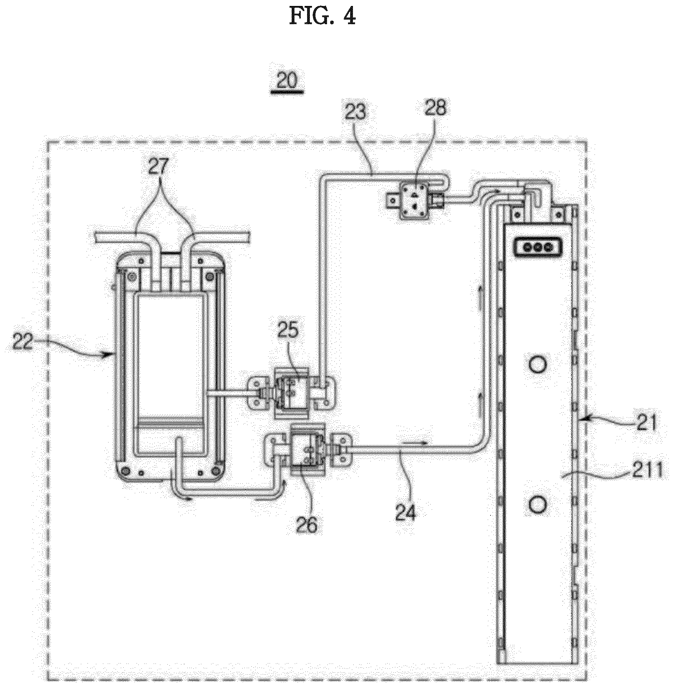

As illustrated in FIG. 4, after cooking of food is completed through steam, the operation of the water supply pump 25 may be stopped. The water flow sensing sensor 28 disposed at the water supply tube 23 senses whether water moves through the water supply tube 23, thus identifying whether the water supply is blocked. Since the water flow sensing sensor 28 senses whether water is supplied in a state in which water is not supplied to the steam generator 22, the steam generator 22 may be operated more safely.

After a blocking to the water supply is identified, the water collection pump 26 may be operated. As illustrated in FIG. 4, residual water in the steam generator 22 is transferred through the water collection tube 24 to the water storage unit 21 depending on the operation of the water collection pump 26. Accordingly, since residual water in the steam generator 22 is collected to the water storage unit 21 to be reused, it may be possible to efficiently use water. Thus, a period between adding water into the water storage container 212 by a user is increased. Therefore, convenience in operating the cooking apparatus is increased.

When all water in the water storage container 212 is used, depending on use of the cooking apparatus, a user separates the water storage container 212 from the main body 10 through the opening 10c in the state of opening the opening 10c by rotating the water supply door 12 to put water into the water storage container 212, and mounts the water storage container 212 inside the main body 10 through the opening 10c.

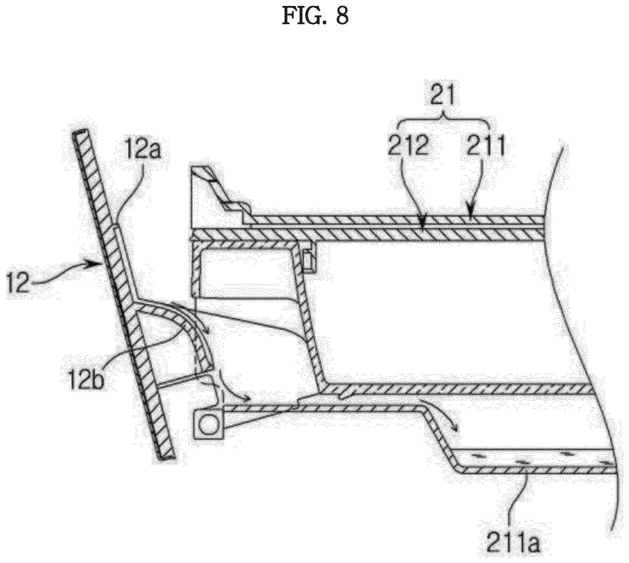

A portion of water may unavoidably drop on the inner surface of the water supply door 12 during attachment and/or detachment of the water storage container 212 in opening the water supply door 12. Drop water dropping on the inner surface of the water supply door 12 may be gathered on the inner surface of the water supply door 12 by the guide rib 12a, as illustrated in FIG. 7, and guided through the opening 10c into the water storage case 211 positioned inside the opening 10c by the guide portion 12b during closing of the opening 10c with the water supply door 12, as illustrated in FIG. 8. Since water guided into the water storage case 211 may be stored in the drop water storage portion 211a provided at the lower portion of the water storage case 211, it may be possible to prevent drop water from being introduced into other components within the main body 10.

Since residual water in a steam generator may be collected to a water storage unit for reuse, it may be possible to efficiently use water, and thus a water supply period may be increased.

Since drop water generated during attachment and detachment of a water storage container is guided to a water storage case, the drop water may be prevented from being introduced into a main body.

Furthermore, it may be possible to maintain a state in which a water supply door stably closes an opening by magnetic force acting between a magnet provided in the water supply door and a magnetic portion provided in a part adjacent to the opening.

Although a few embodiments of the present invention have been shown and described, it would be appreciated by those skilled in the art that changes may be made in these embodiments without departing from the principles of the invention, the scope of which is defined in the claims.

## Claims

1. A cooking apparatus comprising:
a main body (10) provided with a cooking chamber (10a); and
a steam supply device (20) generating steam to supply the steam to the cooking chamber (10a),
wherein the steam supply device (20) comprises a water storage unit (21) to store water, a steam generator (22) that is supplied with water from the water storage unit (21) to generate steam, a water supply tube (23) to transfer water in the water storage unit (21) to the steam generator (22), a water supply pump (25) that is disposed at the water supply tube (23) and allows water to be moved from the water storage unit (21) to the steam generator (22), a water collection tube (24) to transfer residual water in the steam generator (22) to the water storage unit (21), a water collection pump (26) that is disposed at the water collection tube (24) and allows water to be moved from the steam generator (22) to the water storage unit (21), and a water flow sensing sensor (28) disposed at the water supply tube (23),
wherein the water flow sensing sensor (28) is configured to sense whether flow of water to the steam generator (22) is blocked, and
wherein the cooking apparatus is further configured to operate the water collection pump (26) if the flow of water is blocked.

2. The cooking apparatus according to claim 1, wherein the steam supply device (20) comprises a steam supply tube (27) to transfer steam generated by the steam generator (22) to the cooking chamber (10a).

3. The cooking apparatus according to any one of the preceding claims, wherein:
the water storage unit (21) comprises a water storage case (211) mounted within the main body (10) and a water storage container (212) that is separately installed to the water storage case (211); and
the main body (10) comprises an opening (10c) through which the water storage container passes (212), and a water supply door (12) that is rotatably mounted, at a lower end thereof, to a front surface of the main body (10) to open and close the opening (10c) during rotation of the water supply door (12).

4. The cooking apparatus according to claim 3, wherein the water supply door (12) comprises a guide rib (12a) that is provided on an inner surface thereof and is formed in a U-shape oriented downward, and a guide portion (12b) protruding inside the water supply door (12) from an inner surface lower portion thereof, a lower end of the guide rib (12a) being formed at both sides of the guide portion (12b).

5. The cooking apparatus according to claim 3 or 4, wherein the water storage case (211) comprises a drop water storage portion (211a) recessed downward at a lower portion thereof to receive and gather drop water.

6. The cooking apparatus according to any one of claims 3 to 5, wherein:
the main body (10) comprises a non-magnetic portion (10d) made of a non-magnetic substance that is provided in a part adjacent to the opening (10c) and a magnetic portion (10e) made of a magnetic substance that is provided in the part adjacent to the opening (10c); and
the water supply door (12) comprises at least one magnet (14A, 14B) disposed to face the non-magnetic portion (10d).

7. The cooking apparatus according to claim 6, wherein the at least one magnet (14A, 14B) comprises a first magnet (14A) a portion of which faces the magnetic portion (10e) and the remainder of which faces the non-magnetic portion (10d), and a second magnet (14B) the entirety of which faces all of the non-magnetic portion (10d).

8. The cooking apparatus according to claim 6 or 7, wherein the main body (10) comprises a button (13) disposed in the part adjacent to the opening (10c), a protrusion length of the button (13) alternately varying depending on the number of times the button (13) is pressed.

## Patentansprüche

1. Kochvorrichtung, die Folgendes umfasst:
einen Hauptkörper (10), der mit einer Kochkammer (10a) bereitgestellt wird; und
ein Dampfzufuhrgerät (20), das Dampf generiert, um den Dampf der Kochkammer (10a) zuzuführen,
wobei das Dampfzufuhrgerät (20) Folgendes umfasst:
eine Wasserspeichereinheit (21), um Wasser zu speichern, einen Dampfgenerator (22), dem Wasser von der Wasserspeichereinheit (21) zugeführt wird, um Dampf zu generieren, ein Wasserzufuhrrohr (23), um Wasser in der Wasserspeichereinheit (21) zu dem Dampfgenerator (22) zu transferieren, eine Wasserzufuhrpumpe (25), die an dem Wasserzufuhrrohr (23) angeordnet ist und erlaubt, dass Wasser von der Wasserspeichereinheit (21) zu dem Dampfgenerator (22) bewegt wird, ein Wassersammelrohr (24), um Restwasser in dem Dampfgenerator (22) zu der Wasserspeichereinheit (21) zu transferieren, eine Wassersammelpumpe (26), die an dem Wassersammelrohr (24) angeordnet ist und erlaubt, dass Wasser von dem Dampfgenerator (22) zu der Wasserspeichereinheit (21)bewegt wird, und einen Wasserflusssensierungssensor (28), der an den Wasserzufuhrrohr (23) angeordnet ist,
wobei der Wasserflusssensierungssensor (28) konfiguriert ist, zu sensieren, ob ein Fluss von Wasser zu dem Dampfgenerator (22) blockiert ist, und
wobei die Kochvorrichtung ferner konfiguriert ist, die Wassersammelpumpe (26) zu betreiben, falls der Fluss von Wasser blockiert ist.

2. Kochvorrichtung gemäß Anspruch 1, wobei das Dampfzufuhrgerät (20) ein Dampfzufuhrrohr (27) umfasst, um Dampf, der durch den Dampfgenerator (22) generiert wird, zu der Kochkammer (10a) zu transferieren.

3. Kochvorrichtung gemäß einem der vorhergehenden Ansprüche, wobei:
die Wasserspeichereinheit (21) ein Wasserspeichergehäuse (211), das innerhalb des Hauptkörpers (10) montiert ist, und einen Wasserspeicherbehälter (212), der separat an dem Wasserspeichergehäuse (211) installiert ist, umfasst; und
der Hauptkörper (10) eine Öffnung (10c), durch die der Wasserspeicherbehälter hindurch geht (212), und eine Wasserzufuhrtür (12), die drehbar montiert ist, an einem unteren Ende von diesem, an einer vorderen Oberfläche des Hauptkörpers (10), um die Öffnung (10c) während der Drehung der Wasserzufuhrtür (12) zu öffnen und schließen, umfasst.

4. Kochvorrichtung gemäß Anspruch 3, wobei die Wasserzufuhrtür (12) Folgendes umfasst: eine Führungsrippe (12a), die auf einer inneren Oberfläche von dieser bereitgestellt ist und in einer nach unten ausgerichteten U-Form ausgebildet ist, und einen Führungsbereich (12b), der an der Innenseite der Wasserzufuhrtür (12) von einem unteren Bereich der inneren Oberfläche von dieser übersteht, wobei ein unteres Ende der Führungsrippe (12a) an beiden Enden des Führungsbereichs (12b) ausgebildet ist.

5. Kochvorrichtung gemäß Anspruch 3 oder 4, wobei das Wasserspeichergehäuse (211) einen Tropfwasserspeicherbereich (211a) umfasst, der in einem unteren Bereich von diesem nach unten versenkt ist, um Tropfwasser zu empfangen und aufzunehmen.

6. Kochvorrichtung gemäß einem der Ansprüche 3 bis 5, wobei:
der Hauptkörper (10) einen nicht magnetischen Bereich (10d), der aus einem nicht magnetischen Stoff gefertigt ist, der in einem Teil neben der Öffnung (10c) bereitgestellt wird, und einen magnetischen Bereich (10e), der aus einem magnetischen Stoff gefertigt ist, der in dem Teil neben der Öffnung (10c) bereitgestellt wird, umfasst; und
die Wasserzuführtür (12) mindestens einen Magneten (14A, 14B) umfasst, der so angeordnet ist, dass er dem nicht magnetischen Bereich (10d) zugewandt ist.

7. Kochvorrichtung gemäß Anspruch 6, wobei der mindestens eine Magnet (14A, 14B) einen ersten Magneten (14A), von dem ein Bereich dem magnetischen Bereich (10e) zugewandt ist und von dem der Rest dem nicht magnetischen Bereich (10d) zugewandt ist, und einen zweiten Magneten (14B), von dem die Gesamtheit dem ganzen nicht magnetischen Bereich (10d) zugewandt ist, umfasst.

8. Kochvorrichtung gemäß Anspruch 6 oder 7, wobei der Hauptkörper (10) einen Knopf (13) umfasst, der in dem Teil neben der Öffnung (10c) angeordnet ist, wobei eine Überstandslänge des Knopfes (13) abhängig von der Zahl von Malen, die der Knopf (13) gedrückt wird, alternierend variiert.

## Revendications

1. Appareil de cuisson comprenant :
un corps principal (10) doté d'une chambre de cuisson (10a) ; et
un dispositif de fourniture de vapeur (20) générant de la vapeur pour fournir la vapeur à la chambre de cuisson (10a),
dans lequel le dispositif de fourniture de vapeur (20) comprend une unité de stockage d'eau (21) permettant de stocker de l'eau, un générateur de vapeur (22) qui est fourni en eau à partir de l'unité de stockage d'eau (21) pour générer de la vapeur, un tube de fourniture d'eau (23) permettant de transférer de l'eau dans l'unité de stockage d'eau (21) au générateur de vapeur (22), une pompe de fourniture d'eau (25) qui est disposée au niveau du tube de fourniture d'eau (23) et permet à l'eau d'être déplacée à partir de l'unité de stockage d'eau (21) vers le générateur de vapeur (22), un tube de collecte d'eau (24) permettant de transférer de l'eau résiduelle dans le générateur de vapeur (22) vers l'unité de stockage d'eau (21), une pompe de collecte d'eau (26) qui est disposée au niveau du tube de collecte d'eau (24) et permet à l'eau d'être déplacée à partir du générateur de vapeur (22) vers l'unité de stockage d'eau (21), et un capteur de détection d'écoulement d'eau (28) disposé au niveau du tube de fourniture d'eau (23),
dans lequel le capteur de détection d'écoulement d'eau (28) est configuré pour détecter si oui ou non un écoulement d'eau vers le générateur de vapeur (22) est bloqué, et
dans lequel l'appareil de cuisson est en outre configuré pour actionner la pompe de collecte d'eau (26) si l'écoulement d'eau est bloqué.

2. Appareil de cuisson selon la revendication 1, dans lequel le dispositif de fourniture de vapeur (20) comprend un tube de fourniture de vapeur (27) permettant de transférer de la vapeur générée par le générateur de vapeur (22) vers la chambre de cuisson (10a).

3. Appareil de cuisson selon l'une quelconque des revendications précédentes, dans lequel :
l'unité de stockage d'eau (21) comprend un boîtier de stockage d'eau (211) monté à l'intérieur du corps principal (10) et un contenant de stockage d'eau (212) qui est installé séparément sur le boîtier de stockage d'eau (211) ; et
le corps principal (10) comprend une ouverture (10c) à travers laquelle le contenant de stockage d'eau passe (212), et une porte de fourniture d'eau (12) qui est montée en rotation, au niveau d'une extrémité inférieure de celle-ci, sur une surface avant du corps principal (10) pour ouvrir et fermer l'ouverture (10c) pendant une rotation de la porte de fourniture d'eau (12) .

4. Appareil de cuisson selon la revendication 3, dans lequel la porte de fourniture d'eau (12) comprend une nervure de guidage (12a) qui est disposée sur une surface interne de celle-ci et est formée sous une forme de U orientée vers le bas, et une portion de guidage (12b) faisant saillie à l'intérieur de la porte de fourniture d'eau (12) à partir d'une portion inférieure de surface interne de celle-ci, une extrémité inférieure de la nervure de guidage (12a) étant formée au niveau des deux côtés de la portion de guidage (12b).

5. Appareil de cuisson selon la revendication 3 ou 4, dans lequel le boîtier de stockage d'eau (211) comprend une portion de stockage de gouttes d'eau (211a) évidée vers le bas au niveau d'une portion inférieure de celle-ci pour recevoir et collecter des gouttes d'eau.

6. Appareil de cuisson selon l'une quelconque des revendications 3 à 5, dans lequel :
le corps principal (10) comprend une portion non magnétique (10d) composée d'une substance non magnétique qui est disposée dans une partie adjacente à l'ouverture (10c) et une portion magnétique (10e) composée d'une substance magnétique qui est disposée dans la partie adjacente à l'ouverture (10c) ; et
la porte de fourniture d'eau (12) comprend au moins un aimant (14A, 14B) disposé pour faire face à la portion non magnétique (10d).

7. Appareil de cuisson selon la revendication 6, dans lequel l'au moins un aimant (14A, 14B) comprend un premier aimant (14A) dont une portion fait face à la portion magnétique (10e) et dont le reste fait face à la portion non magnétique (10d), et un second aimant (14B) dont l'intégralité fait face à toute la portion non magnétique (10d).

8. Appareil de cuisson selon la revendication 6 ou 7, dans lequel le corps principal (10) comprend un bouton (13) disposé dans la partie adjacente à l'ouverture (10c), une longueur de saillie du bouton (13) variant en alternance en fonction du nombre de fois où le bouton (13) est pressé.
